# FASCICULE DE BREVET EUROPEEN

(11) **EP 0 528 730 B1**
(45) Date de publication et mention de la délivrance du brevet: **04.11.1998**
(21) Numéro de dépôt: 92402294.0
(22) Date de dépôt: 17.08.1992
(51) Int. Cl.: G06F 12/14, H04L 9/08

(54) **Procédés d'émission et de réception de programmes personnalisés**
Verfahren zum Senden und Empfangen von personalisierten Programmen
Method for emitting and receiving personalized programs

(30) Priorité: 19.08.1991 FR 9110404
(43) Date de publication de la demande: 24.02.1993
(73) Titulaire: FRANCE TELECOM, 75015 Paris (FR); Etablissement Public Télédiffusion de France, 75015 Paris (FR)
(72) Inventeur: Coutrot, Françoise, F-35510 Cesson-Sevigne (FR); Fevrier, Pierre, F-35250 St Sulpice la Foret (FR)
(74) Mandataire: Signore, Robert

(56) Documents cités:
- EP-A- 0 277 247
- EP-A- 0 285 520
- EP-A- 0 427 601
- COMPUTERS & SECURITY. vol. 9, no. 6, Octobre 1990, AMSTERDAM NL pages 539 - 546 L.HARN ET AL. 'A cryptographic key generation scheme for multilevel data security'
- PROC. COMP EURO 89 'VLSI AND COMPUTER PERIPHERALS', HAMBURG, MAY 8-12, 1989 TOPIC 4 pages 159 - 163 M.STEINACKER 'VLSI crypto-technology (application requirements)'

## Description

### Domaine technique

La présente invention a pour objet un procédé d'émission et un procédé de réception de programmes personnalisés.

La forte augmentation des supports de diffusion (satellites, câbles, herztien) amène les opérateurs de programmes à multiplier les offres de services pour des programmes à contrôle d'accès, qu'il s'agisse de programmes audiovisuels, sonores ou de transmission de données.

Le principe du contrôle de l'accès à de tels services repose sur l'embrouillage d'un programme à l'émission et sur le désembrouillage du message reçu sous le contrôle d'un titre d'accès. Les systèmes d'embrouillage et de désembrouillage sont initialisés par une donnée qui varie aléatoirement, appelée mot de contrôle. Les informations décrivant les critères d'accès au programme ainsi qu'une forme protégée du mot de contrôle sont incluses dans des messages de contrôle des titres d'accès, messages qui accompagnent le programme embrouillé.

Pour accéder à un programme embrouillé, il faut que le dispositif d'accès conditionnel puisse exploiter un des messages de contrôle des titres d'accès associés au programme. Dans le cas de services "personnalisés", pour lesquels le programme est composé d'une multitude d'éléments de programme (séquences vidéo et/ou sons et/ou données) adressés à autant de destinataires différents, chaque élément de programme ne doit être restitué en clair qu'à son seul destinataire et les messages de contrôle des titres d'accès doivent permettre de garantir la protection de chacun des éléments de programme.

La présente invention a pour objet un procédé d'émission et de réception de messages de contrôle des titres d'accès qui permette à tout destinataire (mais à lui seul) de recevoir les éléments de programme qui lui sont adressés dans le cadre d'un service de diffusion personnalisé.

Les applications d'un tel procédé sont tous les services de diffusion de programmes personnalisés multiplexés sur un même support de diffusion. Ainsi, par exemple, la messagerie vocale, la diffusion de données (télex, téléchargement de données, télécopie diffusée, radiomessagerie (Opérator, Alphapage, ...), la diffusion d'images fixes ou animées (vidéotransmission, ...).

### Etat de la technique antérieure

Les procédés actuels permettant de protéger l'accès à un programme diffusé consistent à affecter à chaque élément de programme un message de contrôle des titres d'accès. Cette technique est largement utilisée dans les services de télévision à péage pour lesquels chaque programme ou élément de programme concerne une audience importante et donc pour lesquels il suffit d'associer un ou plusieurs (typiquement 3 voire 4) messages de contrôle des titres d'accès à l'ensemble du programme diffusé. Le débit des informations spécifiques au contrôle d'accès relativement à un programme diffusé est alors très faible (typiquement quelques centaines d'octets par seconde pour contrôler un débit d'informations de plusieurs Mégaoctets par seconde).

Chaque message de contrôle des titres d'accès comporte en général quatre champs :
- un identificateur de la clé de service à utiliser,
- un champ précisant les conditions d'accès à satisfaire pour avoir le droit d'utiliser cette clé de service,
- le(s) cryptogramme(s) d'un ou de deux mots de contrôle,
- un champ de redondance, qui peut être utilement ajouté afin que le processeur de sécurité ne puisse être utilisé en dehors du contexte prévu.

Quand le processeur de sécurité contient un droit d'accès convenable, c'est-à-dire quand il détient la clé de service indiquée par l'identificateur et que cette clé est munie d'un statut compatible avec certaines des conditions indiquées dans le champ de critères d'accès, le processeur de sécurité déchiffre le(s) cryptogramme(s) pour reconstituer le(s) mot(s) de contrôle.

Le mot de contrôle permet au terminal de désembrouiller le programme ou les éléments de programme auxquels il est associé.

Dans le cas de services de diffusion personnalisés, l'extension de la technique précédente, qui consisterait à associer autant de messages de contrôle des titres d'accès qu'il y a d'éléments de programme accessibles de façon distincte, aménerait à diminuer, dans certains cas, la ressource d'informations par deux, en considérant que le contenu de l'information à transmettre est du même ordre d'encombrement que le message de contrôle des titres d'accès lui-même (cas de radiomessageries affichant 40 caractères).

Cette forte diminution de la ressource utile restante (l'information elle-même) va à l'encontre de la rentabilité économique recherchée pour le service diffusé.

On connaît, par le document EP 0 285 520, un procédé pour acheminer des clés secrètes vers des modules de sécurité et des cartes utilisateurs, dans un réseau de traitement d'informations. Selon ce procédé, on transmet la clé sous forme chiffrée, ce chiffrement étant obtenu par un algorithme de chiffrement faisant intervenir une clé diversifiée, laquelle est obtenue par un algorithme de diversification faisant intervenir une clé de base et des informations de diversification.

Un tel procédé n'est pas adapté à l'émission de programmes mais ne concerne que les services utilisant des cartes.

### Exposé de l'invention

La présente invention a justement pour but de remédier à cet inconvénient. A cette fin, la présente invention prévoit un procédé dans lequel le programme est décomposé en autant d'éléments de programme qu'il y a de séquences personnalisées (vidéo et/ou sons et/ou données), ces éléments étant repérés par une identification propre à leur destinataire et ayant un contenu embrouillé à partir d'un mot de contrôle qui est spécifique à chaque destinataire, ce qui garantit la confidentialité des séquences de programme.

Au programme diffusé est associé un message de contrôle des titres d'accès qui va permettre à l'ensemble des processeurs de sécurité des usagers autorisés de reconstituer, à partir du cryptogramme d'un mot de cont ôle général appelé mot de contrôle "racine" et de l'identification de chaque destinataire, le mot de contrôle spécifique qui permettra le désembrouillage des éléments de programme repérés par cette même identification du destinataire.

L'invention permet, tout en garantissant une confidentialité totale de chacun des éléments de progr mme, de ne diffuser qu'un seul message de contrôle des titres d'accès à partir duquel tous les destinataires de séquences de programme pourront calculer le mot de contrôle personnalisé ayant servi à embrouiller en amont les informations qui les concernent.

Un tel procédé permet de revenir à des débits d'informations identiques à ceux des services de télévision à péage, à savoir quelques centaines d'octets par seconde.

De façon précise, l'invention a pour objet un procédé d'émission de programmes personnalisés, dans lequel on embrouille les programmes par un mot de contrôle et on forme des messages de contrôle d'accès contenant, notamment, des critères d'accès et un cryptogramme du mot de contrôle, ce procédé étant caractérisé par le fait que, pour adresser des programmes personnalisés à divers destinataires repérés par des identificateurs, le mot de contrôle utilisé pour embrouiller le programme destiné à un destinataire particulier est obtenu par un algorithme de diversification à partir de l'identificateur du destinataire et d'un mot de contrôle unique dit mot de contrôle "racine", valable pour tous les destinataires et on n'émet qu'un seul message de contrôle d'accès pour tous les destinataires, ce message contenant, notamment, un cryptogramme du mot de contrôle racine, et les identificateurs des destinataires.

La présente invention a également pour objet un procédé de réception de programmes émis selon le procédé d'émission précédent. Ce procédé est du genre de ceux dans lesquels on vérifie si les critères d'accès sont remplis, on reconstitue le mot de contrôle ayant servi à l'embrouillage et on désembrouille les programmes reçus, et il est caractérisé par le fait que chaque destinataire, à l'aide de son identificateur et du message de contrôle d'accès, reconstitue, à partir du mot de contrôle racine, le mot de contrôle personnalisé qui lui est propre, ce qui lui permet et à lui seul, de désembrouiller le programme qui lui est destiné.

L'invention peut être mise en oeuvre soit à l'émission, soit à la réception, soit à la fois à l'émission et à la réception.

### Brève description des dessins

- la figure 1 montre de manière générale les diverses opérations effectuées à l'émission,
- la figure 2 illustre la structure générale d'un programme diffusé,
- la figure 3 illustre la structure d'un message de contrôle des titres d'accès,
- la figure 4 montre de manière générale les diverses opérations effectuées à la réception par un dispositif d'accès,
- la figure 5 montre la structure particulière d'un message de contrôle des titres d'accès,
- la figure 6 illustre le format d'un message de type "protocole General Purpose Data" (GPD),
- la figure 7 illustre la structure d'un en-tête de message,
- la figure 8 illustre l'extension d'un en-tête de message,
- la figure 9 illustre un champ d'adresse étendue,
- la figure 10 montre une première variante des moyens permettant d'obtenir, à l'émission, un mot de contrôle personnalisé,
- la figure 11 montre une seconde variante des moyens permettant d'obtenir un mot de contrôle personnalisé,
- la figure 12 montre une première variante des moyens permettant, à la réception, de restituer un mot de contrôle personnalisé lorsque la première variante a été utilisée à l'émission pour obtenir ledit mot de contrôle personnalisé,
- la figure 13 montre une seconde variante des moyens permettant, à la réception, de restituer un mot de contrôle personnalisé lorsque la seconde variante a été utilisée à l'émission pour obtenir ledit mot de contrôle personnalisé.

### Exposé détaillé des modes de réalisation

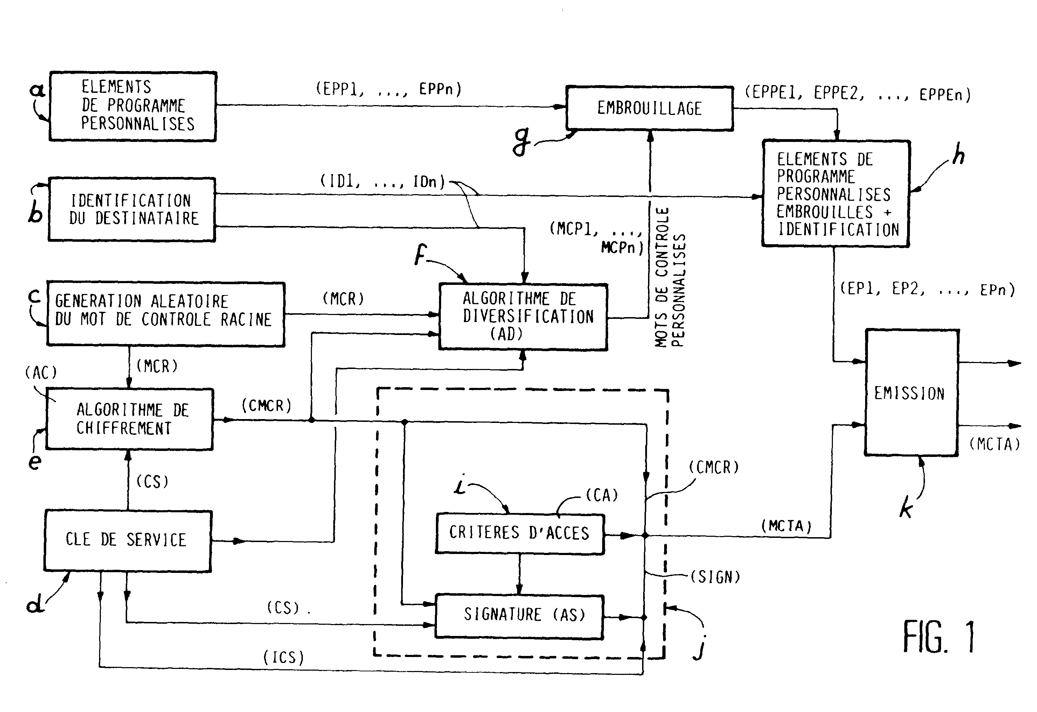

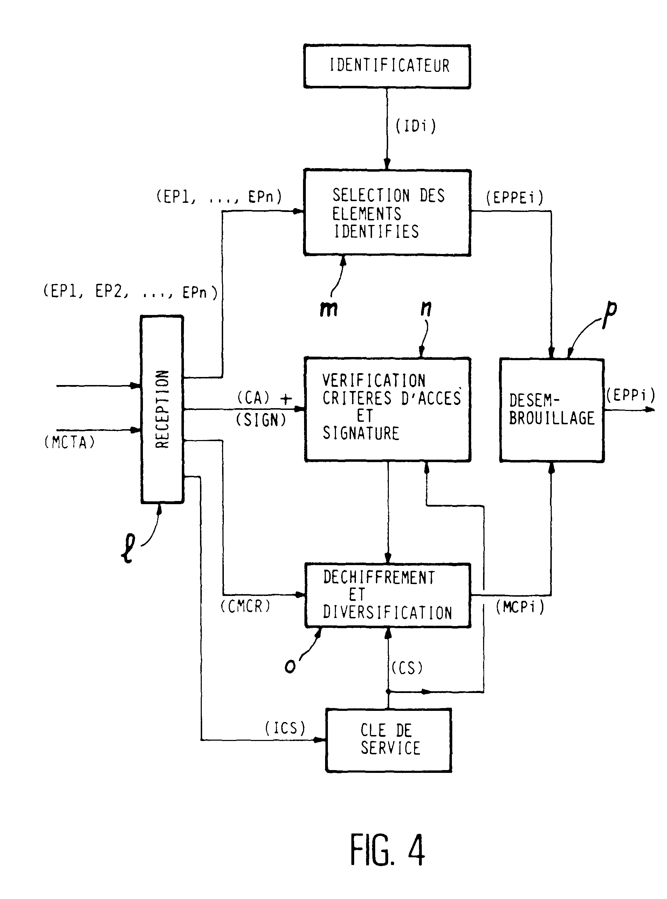

Sur la figure 1 (ainsi que sur d'autres figures générales comme les figures 4, 10, 11, 12, 13, ....), les différents blocs représentés correspondent à diverses opérations. On ne doit pas considérer que ces opérations sont effectuées par autant de circuits indépendants. L'homme du métier sait que ces opérations sont le plus souvent effectuées globalement, par des microprocesseurs, tant à l'émission qu'à la réception.

La figure 1 illustre les opérations essentielles effectuées à l'émission.

Les références littérales (a, b, c, ...) employées sur cette figure correspondent aux paragraphes suivants :
a) on divise le programme à émettre en (n) éléments de programme dits "éléments de programme personnalisés" (EPP1, EPP2, ..., EPPn) destinés à (n) destinataires différents (D1, D2, ..., Dn) ;
b) on affecte à chaque destinataire (D1, D2, ..., Dn) un identificateur (ID1, ID2, ..., IDn) ;
c) on engendre de manière aléatoire un mot de contrôle, valable pour tous les destinataires, appelé "mot de contrôle racine" (MCR) ;
d) on définit une clé de service (CS) par un identificateur de clé de service (ICS) ;
e) à partir du mot de contrôle racine (MCR) et de la clé de service (CS), on met en oeuvre un algorithme, dit de chiffrement (AC), pour obtenir un cryptogramme du mot de contrôle racine (CMCR) ;
f) à partir du mot de contrôle racine (MCR), de l'identification des destinataires (ID1, ID2, ..., IDn) et de la clé de service (CS), on met en oeuvre un algorithme, dit de diversification (AD), qui délivre des mots de contrôle propres à chaque destinataire (D1, D2, ..., Dn) dits "mots de contrôle personnalisés" (MCP1, MCP2, ..., MCPn) ;
g) à partir des éléments de programme personnalisés (EPP1, EPP2, ..., EPPn) et des mots de contrôle personnalisés (MCP1, MCP2, ..., MCPn) correspondant aux différents destinataires (D1, D2, ..., Dn) visés, on embrouille lesdits éléments de programme personnalisés (EPP1, EPP2, ..., EPPn) à l'aide respectivement desdits mots de contrôle personnalisés (MCP1, MCP2, ..., MCPn) pour obtenir des éléments de programme personnalisés embrouillés (EPPE1, EPPE2, ..., EPPEn) ;
h) on adjoint à ces éléments de programme personnalisés embrouillés les identificateurs des destinataires (ID1, ID2, ..., IDn) pour constituer des éléments de programme (EP1, EP2, ..., EPn) propres à ces différents destinataires ;
i) on définit des critères d'accès (CA) auxquels il faut satisfaire pour avoir le droit d'utiliser la clé de service (CS) ;
j) à partir de l'identificateur de clé de service (ICS), du cryptogramme du mot de contrôle racine (CMCR), des critères d'accès (CA) et éventuellement d'une signature de ce cryptogramme et des critères d'accès (SIGN), on forme des messages de contrôle des titres d'accès (MCTA) ;
k) on émet les éléments de programme embrouillés (EP1, EP2, ..., EPn) ainsi que les messages de contrôle des titres d'accès (MCTA).

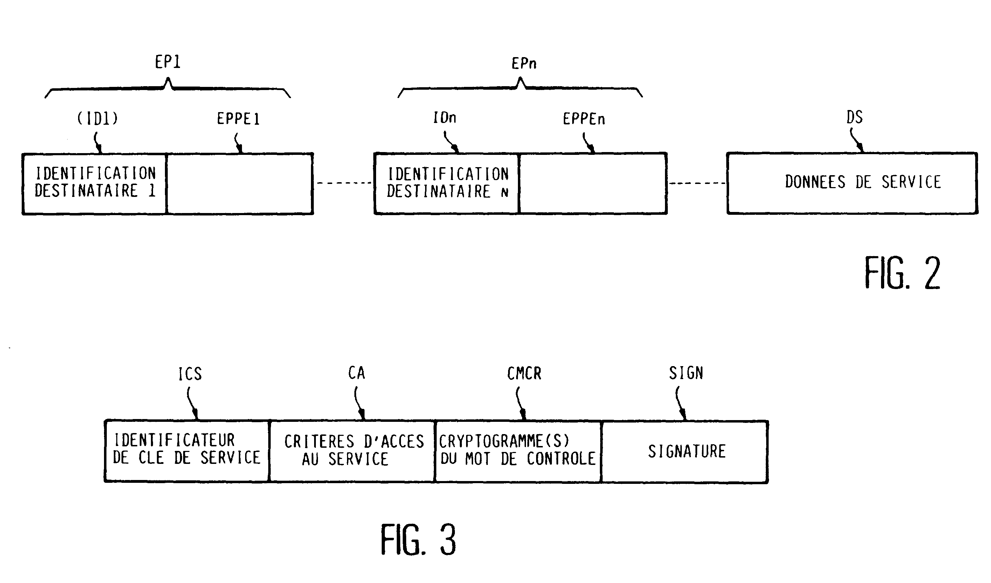

La figure 2 montre la structure générale des éléments de programme (EP1), ... (EPn) avec leurs identificateurs de destinataires, respectivement (ID1), ... (IDn) associés aux éléments de programme personnalisés embrouillés, respectivement (EPPE1), ... (EPPEn). Peut s'ajouter à ces (n) blocs, un bloc de données de service (DS), non personnalisées (service de diffusion à large audience) ou des données de service permettant de décrire la structure propre au service.

Le message de contrôle des titres d'accès (MCTA), qui inclut les critères d'accès au programme et les informations contenant le cryptogramme du mot de contrôle racine (CMCR), peut avoir une structure telle que celle de la figure 3 où l'on voit un identificateur de clé de service (ICS) suivi des critères d'accès au service (CA), suivis du cryptogramme du mot de contrôle racine (CMCR), avec, enfin (et éventuellement) la signature (SIGN) des critères d'accès et du cryptogramme du mot de contrôle racine.

La suite des opérations effectuées dans le terminal de l'un des destinataires, par exemple le destinataire de rang i (i étant un entier compris entre 1 et n), est représenté schématiquement sur la figure 4. Ces opérations sont définies dans les paragraphes suivants où le numéro du paragraphe se réfère encore à la référence littérale servant à repérer les blocs sur la figure :
l) chaque destinataire reçoit les éléments de programme embrouillés (EP1, EP2, ..., EPn) avec leurs identificateurs de destinataires (ID1, ID2, ..., IDn) et leurs éléments de programme personnalisés embrouillés (EPPE1, EPPE2, ..., EPPEn) et reçoit aussi les messages de contrôle des titres d'accès (MCTA) ;
m) le destinataire particulier (Di) retient, parmi les éléments de programme qu'il reçoit, ceux qui contiennent son identificateur (IDi), ce qui lui donne les éléments de programmes personnalisés embrouillés (EPPEi) qui lui sont destinés ;
n) ce destinataire particulier (Di), à partir des messages de contrôle des titres d'accès (MCTA), vérifie si les critères d'accès (CA) sont remplis par le titre d'accès qu'il possède ; le cas échéant, il vérifie l'intégrité du message par analyse de la signature (SIGN) si celle-ci a été effectuée à l'émission ;
o) à partir du cryptogramme du mot de contrôle racine (CMCR), de la clé de service (CS), et de son identificateur IDi), le destinataire (Di) met en oeuvre un algorithme inverse (AC⁻¹) de l'algorithme de chiffrement (AC) qui a été mis en oeuvre à l'émission dans l'opération e) ; il met également en oeuvre un algorithme (AD) qui est l'algorithme de diversification (AD) qui a été mis en oeuvre à l'émission dans l'opération f) ; il retrouve finalement le mot de contrôle personnalisé qui lui est propre (MCPi) ;
p) le destinataire (Di) désembrouille alors les éléments de programme personnalisés embrouillés (EPPEi) qui qui sont destinés, obtenus après l'opération m) à partir du mot de contrôle personnalisé (MCPi) obtenu après l'opération o) et obtient, en clair, les éléments de programme personnalisé (EPPi) qui lui sont propres.

Un mode de réalisation va être décrit maintenant, qui s'applique aux signaux de la famille MAC/Paquet-EUROCRYPT (y compris dans le mode de diffusion de données plein canal).

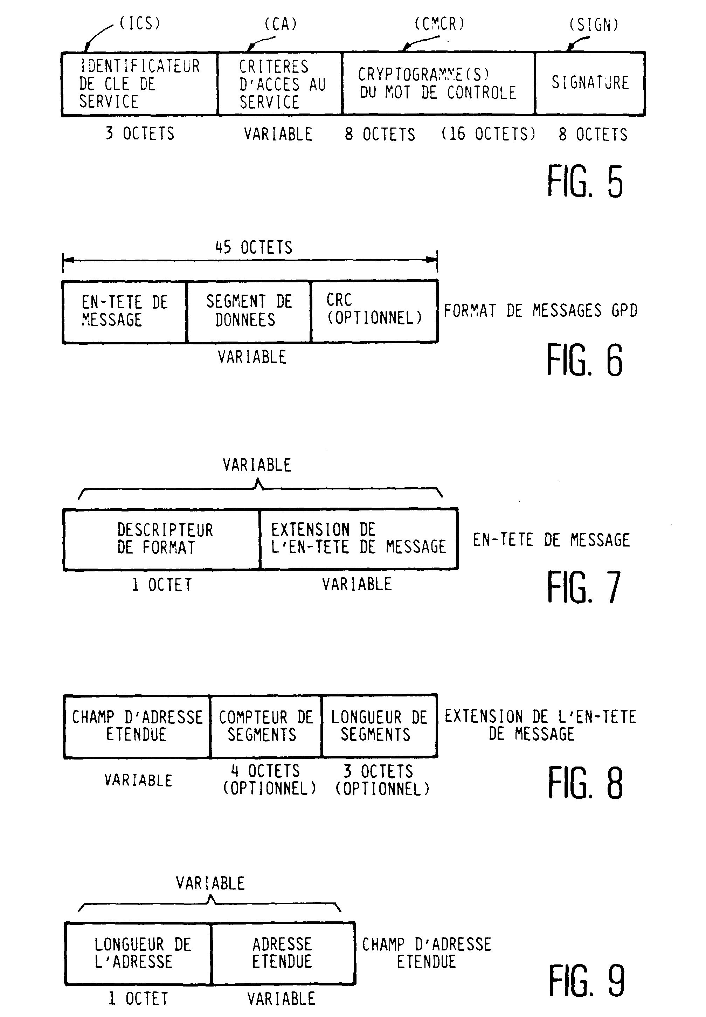

La structure des messages de contrôle des titres d'accès est telle que définie dans la spécification du système d'accès conditionnel EUROCRYPT applicable aux signaux de la famille MAC/Paquet. Elle est illustrée sur la figure 5 : l'identificateur de clé de service (ICS) désigne une clé secrète (CS) et s'étend sur 3 octets ; les critères d'accès (CA) sur un nombre d'octets variable ; le ou les cryptogramme(s) du mot de contrôle racine (CMCR) obtenu à l'aide de la clé secrète (CS) s'étend(ent) sur 8 ou 16 octets ; enfin, la signature s'étend sur 8 octets.

Cette signature est le résultat d'un algorithme de compression appliqué aux informations présentes dans le message de contrôle des titres d'accès (critères d'accès et cryptogramme(s) du mot de contrôle) en utilisant la clé secrète (CS).

Les formats des messages correspondant à la diffusion de données numériques (télétexte, sons, ...) sont décrits dans la partie 4C du document de spécification d'un signal MAC/Paquet sous le vocable "Protocole General Purpose Data (GPD)". La structure de ces messages est illustrée sur la figure 6 où le message comprend, en tout, 45 octets avec un en-tête de message variable, un segment de données variable et un champ de code de détection d'erreur "Code à Redondance Cyclique" (CRC) optionnel.

L'en-tête de message est illustré sur la figure 7 avec un descripteur de format sur 1 octet et une extension de l'en-tête de message de longueur variable. Le descripteur précise si le champ d'extension d'en-tête de message est présent, si le compteur de segment est présent et si le champ d'adresse est présent.

La figure 8 illustre l'extension de l'en-tête de message avec un champ d'adresse étendue variable, un compteur de segment (optionnel) sur 4 octets et une longueur de segment (optionnel) sur 3 octets.

Enfin, la figure 9 illustre le champ d'adresse étendue avec une longueur d'adresse sur un octet et une adresse étendue de longueur variable.

Il est proposé d'identifier les messages au format GPD en précisant dans le champ "adresse étendue", l'adresse unique (UA) (5 octets) telle que décrite dans la spécification EUROCRYPT. Cette adresse caractérise de façon unique chacun des processeurs de sécurité des usagers.

A noter que le procédé d'identification des messages peut également être intégré au niveau "applicatif" du message, donc dépendant de la nature des informations échangées à l'intérieur des segments de données.

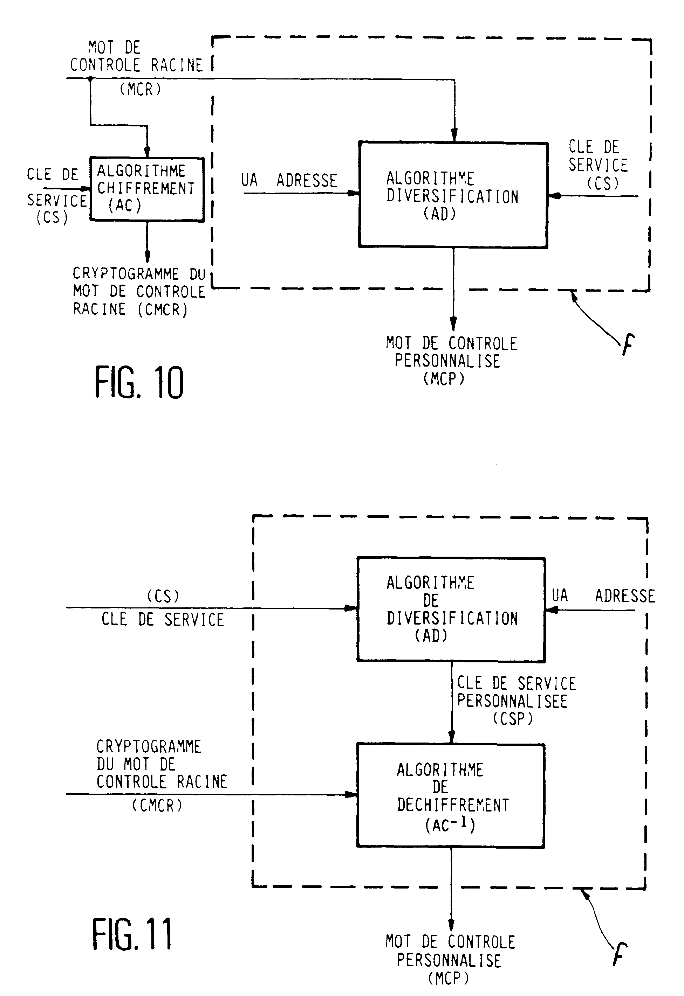

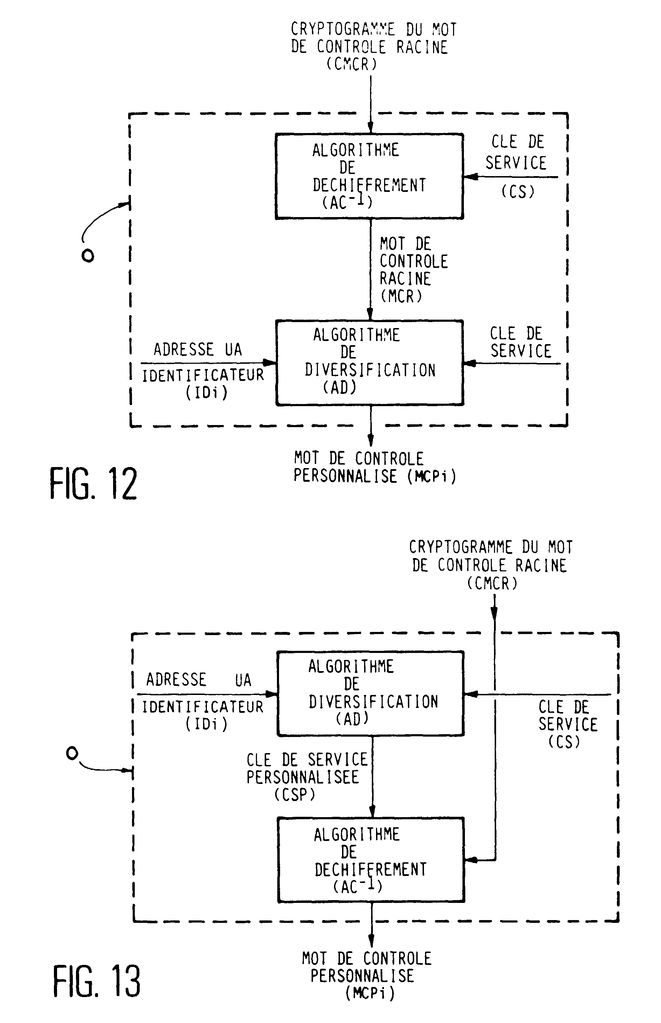

Les figures 10 et 11 montrent deux variantes, parmi les réalisations possibles, d'obtention d'un mot de contrôle personnalisé à partir, soit du mot de contrôle racine soit du cryptogramme du mot de contrôle racine. Ces deux variantes sont utilisées l'émission. Il leur correspond deux variantes utilisées à la réception et qui seront décrites en liaison avec les figures 12 et 13.

Dans la variante illustrée sur la figure 10, pour obtenir, dans l'opération f) définie plus haut, des mots de contrôle personnalisés (MCP1, MCP2, ..., MCPn) à partir du mot de contrôle racine (MCR), de l'identification des destinataires défini par une adresse unique (UA) et de la clé de service (CS), on applique l'algorithme de diversification (AD) au mot de contrôle racine avec l'adresse unique (UA) du destinataire comme paramètre de diversification. Pour obtenir le cryptogramme du mot de contrôle racine, on applique l'algorithme de chiffrement (AC) au mot de contrôle racine (MCR) en prenant la clé de service (CS) comme paramètre de chiffrement.

Dans la variante de la figure 11, on applique l'algorithme de diversification (AD) à la clé de service (CS) en prenant l'adresse unique comme paramètre de diversification, ce qui donne une clé de service personnalisée (CSP) ; puis on applique l'algorithme de déchiffrement (AC⁻¹) au cryptogramme du mot de contrôle racine (CMCR) en prenant la clé de service personnalisée (CSP) comme paramètre de chiffrement.

A la réception, dans le cas de la première variante illustrée sur la figure 12, pour obtenir, à partir du cryptogramme du mot de contrôle racine (CMCR), de la clé de service (CS) et de l'adresse (UA), le mot de contrôle personnalisé (MCPi) qui est propre au destinataire (Di), on commence par appliquer au cryptogramme du mot de contrôle racine (CMCR) l'algorithme de déchiffrement inverse (AC⁻¹) en pre ant la clé de service (CS) comme paramètre de déchiffrement, ce qui donne le mot de contrôle racine (MCR) ; puis on applique à ce mot de contrôle racine (MCR) l'algorithme de diversification inverse (AD) en prenant l'adresse unique (UA) comme paramètre de diversification, ce qui donne finalement le mot de contrôle personnalisé (MCPi) qui lui est propre.

Dans la seconde variante, illustrée sur la figure 13, pour obtenir, à partir du cryptogramme du mot de contrôle racine (CMCR), de la clé de service (CS) et de l'adresse unique (UA), le mot de contrôle personnalisé qui est propre au destinataire (Di), on commence par appliquer l'algorithme de diversification (AD) à la clé de service (CS), avec l'adresse (UA) comme paramètre de diversification, ce qui donne la clé de service personnalisée (CSP) ; puis on applique l'algorithme de déchiffrement (AC⁻¹) au cryptogramme du mot de contrôle racine (CMCR) en prenant la clé de service personnalisée (CSP) comme paramètre de déchiffrement, ce qui donne finalement le mot de contrôle personnalisé (MCPi) qui est propre au destinataire (Di).

Dans quelle que variante que ce soit, ayant obtenu le mot de contrôle personnalisé, on applique à un générateur pseudo-aléatoire délivrant des suites déchiffrantes qui correspondent aux suites chiffrantes utilisées à l'émission.

Les moyens pour embrouiller et désembrouiller les segments de données peuvent être constitués classiquement par des portes OU-exclusif, dont une entrée reçoit les suites chiffrantes/déchiffrantes et l'autr les données en clair/embrouillées et dont la sortie délivre les données embrouillées/en clair.

Dans la réalisation pratique, le traitement effectué par le dispositif d'accès conditionnel en émission/réception est intégralement réalisé par un processeur de sécurité (carte à mémoire) pour un débit in érieur ou égal à 2400 bauds (avec les technologies de cartes à mémoire actuelles). Le processeur délivre les suites chiffrantes/déchiffrantes à appliquer aux données à embrouiller/désembrouiller. En cas de débit supérieur, la fonction de génération pseudo-aléatoire est déportée dans le terminal et le processeur délivre les mots de contrôle personnalisés.

## Revendications

1. Procédé d'émission de programmes personnalisés, dans lequel on embrouille les programmes par un mot de contrôle et on forme des messages de contrôle d'accès contenant, notamment, des critères d'accès et un cryptogramme du mot de contrôle, ce procédé étant caractérisé par le fait que, pour adresser des programmes personnalisés à divers destinataires (D1, D2, ..., Dn) repérés par des identificateurs (ID1, ID2, ..., IDn), le mot de contrôle utilisé pour embrouiller le programme destiné à un destinataire particulier est obtenu par un algorithme de diversification (AD) à partir de l'identificateur du destinataire et d'un mot de contrôle unique dit mot de contrôle "racine" (MCR), valable pour tous les destinataires et on n'émet qu'un seul message de contrôle d'accès pour tous les destinataires, ce message contenant, notamment, un cryptogramme du mot de contrôle racine (CMCR) et les identificateurs des destinataires (ID1, ID2, ..., Idn).

2. Procédé selon la revendication 1, caractérisé par le fait qu'il comprend les opérations suivantes :
a) on divise le programme à émettre en divers (n) éléments de programme dits éléments de programme personnalisés (EPP1, EPP2, ..., EPPn) destinés à autant (n) de destinataires différents (D1, D2, ..., Dn) ;
b) on affecte à chaque destinataire (D1, D2, ..., Dn) un identificateur (ID₁, ID₂, ..., IDₙ) ;
c) on engendre de manière aléatoire un mot de contrôle valable pour tous les destinataires, appelé mot de contrôle racine (MCR) ;
d) on définit une clé de service (CS) par un identificateur de clé de service (ICS) ;
e) à partir du mot de contrôle racine (MCR) et de la clé de service (CS), on met en oeuvre un algorithme de chiffrement (AC) pour obtenir un cryptogramme du mot de contrôle racine (CMCR) ;
f) à partir du mot de contrôle racine (MCR) ou du cryptogramme du mot de contrôle racine (CMCR), de l'identification des destinataires (ID₁, ID₂, ..., IDₙ) et de la clé de service (CS), on met en oeuvre un algorithme de diversification (AD) qui délivre des mots de contrôle propres à chaque destinataires (D1, D2, ..., Dn), dits mots de contrôle personnalisés (MCP1, MCP2, ..., MCPn) ;
g) à partir des éléments de programme personnalisés (EPP1, EPP2, ..., EPPn) et des mots de contrôle personnalisés (MCP1, MCP2, ..., MCPn) correspondant aux différents destinataires (D1, D2, ..., Dn) visés, on embrouille lesdits éléments de programme personnalisés (EPP1, EPP2, ..., EPPn) à l'aide respectivement desdits mots de contrôle personnalisés (MCP1, MCP2, ..., MCPn) pour obtenir des éléments de programme personnalisés embrouillés (EPP1, EPP2, ..., EPPn) ;
h) on adjoint à ces éléments de programme personnalisés embrouillés les identificateurs des destinataires (ID1, ID2, ..., IDn) pour constituer des éléments de programme (EP1, EP2, ..., EPn) propres à ces différents destinataires ;
i) on définit des critères d'accès (CA) auxquels il faut satisfaire pour avoir le droit d'utiliser la clé de service (CS) ;
j) à partir du cryptogramme du mot de contrôle racine (CMCR), de l'identificateur de clé de service (ICS), des critères d'accès (CA) et éventuellement d'une signature (SIGN) de ce cryptogramme et des critères d'accès, on forme des messages de contrôle des titres d'accès (MCTA) ;
k) on émet les éléments de programme (EP1, EP2, ..., EPn) ainsi que les messages de contrôle des titres d'accès (MCTA).

3. Procédé selon la revendication 2, caractérisé par le fait que pour obtenir, dans l'opération f), des mots de contrôle personnalisés (MCP1, MCP2, ..., MCPn) à partir du mot de contrôle racine (MCR), de l'identification des destinataires (ID1, ID2, ..., IDn) et de la clé de service (CS), on applique l'algorithme de diversification (AD) au mot de contrôle racine avec la clé de service (CS) et l'adresse unique (UA) du destinataire comme paramètre de diversification (Fig. 10).

4. Procédé selon la revendication 2, caractérisé par le fait que pour obtenir, dans l'opération f), des mots de contrôle personnalisés (MCP1, MCP2, ..., MCPn) à partir du mot de contrôle racine (MCR), de l'identification des destinataires (ID1, ID2, ..., IDn) et de la clé de service (CS), on applique l'algorithme de diversification (AD) à la clé de service (CS) en prenant l'adresse unique comme paramètre de diversification ce qui donne une clé de service personnalisée (CSP) puis, on applique l'algorithme de déchiffrement (AC⁻¹) au cryptogramme du mot de contrôle racine (CMCR) en prenant la clé de service personnalisée (CSP) comme paramètre de déchiffrement (Fig. 11).

5. Procédé de réception de programmes personnalisés émis par le procédé selon l'une quelconque des revendications 1 à 4, ces programmes personnalisés étant embrouillés et reçus avec des identificateurs de destinataires (ID1, ID2, ..., IDn) ainsi qu'avec un message de contrôle des titres d'accès (MCTA) valable pour tous ces destinataires, ledit message de contrôle d'accès comportant des critères d'accès et un cryptogramme d'un mot de contrôle unique (CMCR) dit mot de contrôle racine (MCR), procédé de réception dans lequel on vérifie si les critères d'accès sont remplis, on reconstitue le mot de contrôle (MC) ayant servi à l'embrouillage et on désembrouille les programmes reçus, ce procédé de réception étant caractérisé par le fait que chaque destinataire (D1, D2, ..., Dn), à l'aide de son identificateur (ID1, ID2, ..., IDn) et du message de contrôle d'accès, reconstitue, à partir du mot de contrôle racine (MCR), le mot de contrôle personnalisé (MCP1, MCP2, ..., MCPn) qui lui est propre, ce qui lui permet et à lui seul, de désembrouiller le programme qui lui est destiné.

6. Procédé de réception selon la revendication 5, pour des programmes émis selon la revendication 2, caractérisé par le fait que :
l) chaque destinataire reçoit les éléments de programme (EP1, EP2, ..., EPn) avec leurs identificateurs de destinataires (ID1, ID2, ..., IDn) et leurs éléments de programme personnalisés embrouillés (EPPE1, EPPE2, ..., EPPn) et reçoit aussi les messages de contrôle des titres d'accès (MCTA) ;
m) un destinataire particulier (Di) retient, dans les éléments de programme reçus, ceux qui contiennent l'identificateur qui lui correspond (IDi), ce qui lui donne les éléments de programmes personnalisés embrouillés (EPPEi) qui lui sont destinés ;
n) le destinataire (Di), à partir des messages de contrôle des titres d'accès (MCTA) vérifie si les critères d'accès (CA) sont remplis par le titre d'accès qu'il possède ; le cas échéant, il vérifie l'intégrité du message par analyse de la signature si celle-ci a été effectuée à l'émission ;
o) à partir du cryptogramme du mot de contrôle racine (CMCR), de la clé de service (CS), et de son identificateur (IDi), le destinataire (Di) met en oeuvre l'algorithme inverse (AC⁻¹) de l'algorithme de chiffrement (AC) mis en oeuvre à l'émission dans l'opération e) et met en oeuvre l'algorithme (AD) de diversification (AD) mis en oeuvre à l'émission dans l'opération f) pour retrouver le mot de contrôle personnalisé qui lui est propre (MCPi) ;
p) le destinataire (Di) désembrouille alors les éléments de programme personnalisés embrouillés (EPPEi) qui lui sont destinés obtenus après l'opération m) à partir du mot de contrôle personnalisé (MCPi) obtenu après l'opération o) et obtient en clair les éléments de programme personnalisé (EPPi) qui lui sont propres.

7. Procédé de réception selon la revendication 6, pour des programmes émis selon la revendi3, caractérisé par le fait que pour obtenir, dans l'opération o), à partir du cryptogramme du mot de contrôle racine (CMCR), de la clé de service (CS) et de l'identificateur (IDi), le mot de contrôle personnalisé qui lui est propre (MCPi), le destinataire (Di) commence par appliquer au cryptogramme du mot de contrôle racine (CMCR) l'algorithme de déchiffrement (AC⁻¹) inverse de l'algorithme de chiffrement (AC) en prenant la clé de service (CS) comme paramètre, ce qui lui donne le mot de contrôle racine (MCR), puis il applique à ce mot de contrôle racine (MCR) l'algorithme de diversification (AD) en prenant l'adresse unique (UA) comme paramètre de diversification, ce qui lui donne finalement le mot de contrôle personnalisé (MCPi) qui lui est propre (Fig. 12).

8. Procédé de réception selon la revendication 7, de programmes émis selon la revendication 4, caractérisé par le fait que pour obtenir, dans l'opération o), à partir du cryptogramme du mot de contrôle racine (CMCR), de la clé de service (CS) et de l'identificateur (IDi), le mot de contrôle personnalisé qui lui est propre (MCPi), le destinataire (Di) commence par appliquer l'algorithme de diversification (AD) à la clé de service (CS) avec l'adresse (UA) comme paramètre de diversification, ce qui lui donne la clé de service personnalisée (CSP), puis il applique l'algorithme de déchiffrement (AC⁻¹) au cryptogramme du mot de contrôle racine (CMCR) en prenant la clé de service personnalisée (CSP) comme paramètre de déchiffrement, ce qui lui donne finalement le mot de contrôle personnalisé (MCPi) qui lui est propre (Fig. 13).

## Patentansprüche

1. Verfahren zum Senden von personalisierten Programmen, bei dem man die Programme durch ein Kontrollwort verschlüsselt und Zugangskontrollnachrichten bildet, die insbesondere Zugangskriterien und ein Kryptogramm des Kontrollworts enthalten, wobei dieses Verfahren
**dadurch gekennzeichnet** ist, daß man, um personalisierte Programme an diverse, durch Identifizierer (ID1, ID2, ..., IDn) gekennzeichnete Empfänger (D1, D2, ..., Dn) zu adressieren, das zum Verschlüsseln des für einen bestimmten Empfänger bestimmten Programms benutzte Kontrollwort durch einen Diversifikationsalgorithmus (AD) mit dem Identifizierer des Empfängers und einem einzigen bzw. einmaligen, "Stamm"-Kontrollwort (MCR) genannten Kontrollwort erhält, das für alle Empfänger gültig ist, und man nur eine einzige Zugangskontrollnachricht für alle Empfänger sendet, wobei diese Nachricht insbesondere ein Kryptogramm des Stammkontrollworts (CMCR) und die Identifizierer (ID1, ID2, **...,** IDn) der Empfänger enthält.

2. Verfahren nach Anspruch 1, dadurch gekennzeichnet, daß es die folgenden Operationen umfaßt:
a) man teilt die zu sendenden Programme in diverse (n) personalisierte Programmelemente genannte Elemente (EPP1, EPP2, ..., EPPn), bestimmt für ebensoviele (n) verschiedene Empfänger (D1, D2, ..., Dn);
b) man teilt jedem Empfänger (D1, D2, ..., Dn) einen Identifizierer (ID1, ID2, ..., IDn) zu;
c) man erzeugt ein auf Zufall beruhendes Kontrollwort, gültig für alle Empfänger, Stammkontrollwort (MCR) genannt;
d) man definiert einen Dienstschlüssel (CS) durch einen Dienstschlüssel-Identifizierer (ICS);
e) ausgehend von dem Stammkontrollwort (MCR) und dem Dienstschlüssel (CS) wendet man einen Chiffrieralgorithmus (AC) an, um ein Kryptogramm des Stammkontrollworts (CMCR) zu erhalten;
f) ausgehend von dem Stammkontrollwort (MCR) oder dem Kryptogramm des Stammkontrollworts (CMCR), der Identifikation der Empfänger (ID1, ID2, ..., IDn) und dem Dienstschlüssel (CS) wendet man einen Diversifikationsalgorithmus (AD) an, der jeden Empfänger (D1, D2, ..., Dn) kennzeichnende Kontrollwörter liefert, personalisierte Kontrollwörter (MCP1, MCP2, ..., MCPn) genannt;
g) ausgehend von den personalisierten Programmelementen (EPP1, EPP2, ..., EPPn) und den den verschiedenen anvisierten Empfängern (D1, D2, ..., Dn) entsprechenden personalisierten Kontrollwörtern (MCP1, MCP2, ..., MC), verschlüsselt man die genannten personalisierten Programmelemente (EPP1, EPP2, ..., EPPn) jeweils mit Hilfe der genannten personalisierten Kontrollwörter (MCP1, MCP2, ..., MCPn), um verschlüsselte personalisierte Programmelemente (EPPE1, EPPE2, ..., EPPEn) zu erhalten;
h) man fügt diesen personalisierten verschlüsselten Programmelementen die Identifizierer der Empfänger (ID1, ID2, ..., IDn) hinzu, um für diese verschiedenen Empfänger bestimmte Programmelemente (EP1, EP2, ..., EPn) zu bilden bzw. zu kennzeichnen;
i) man definiert Zugangskriterien (CA), die befriedigt werden müssen, um berechtigt zu sein, den Dienstschlüssel (CS) zu benutzen;
j) ausgehend vom Kryptogramm des Stammkontrollworts (CMCR), dem Dienstschlüssel-Identifizierer (ICS), den Zugangskriterien (CA) und eventuell einer Signatur (SIGN) dieses Kryptogramms und der Zugangskriterien bildet man Zugangsberechtigungs-Kontrollnachrichten (MCTA).
k) man sendet die Programmelemente (EP1, EP2, ..., EPn) sowie die Zugangsberechtigungs-Kontrollnachrichten (MCTA).

3. Verfahren nach Anspruch 2, dadurch gekennzeichnet, daß man, um in Operation f) aus dem Stammkontrollwort (MCR), der Identifikation der Empfänger (ID1, ID2, ..., IDn) und dem Dienstschlüssel (CS) personalisierte Kontrollwörter (MCP1, MCP2, ..., MCPn) zu erhalten, auf das Stammkontrollwort den Diversifikationsalgorithmus (AD) anwendet, mit dem Dienstschlüssel (CS) und der Eigenadresse (UA) des Empfängers als Diversifikationsparameter (Fig. 10).

4. Verfahren nach Anspruch 2, dadurch gekennzeichnet, daß man, um in Operation f) aus dem Stammkontrollwort (MCR), der Identifikation der Empfänger (ID1, ID2, ..., IDn) und dem Dienstschlüssel (CS) personalisierte Kontrollwörter (MCP1, MCP2, ..., MCPn) zu erhalten, den Diversifikationsalgorithmus (AD) auf den Dienstschlüssel (CS) anwendet, indem man die Eigenadresse als Diversifikationsparameter nimmt, was einen personalisierten Dienstschlüssel (CSP) ergibt, und dann den Dechiffrieralgorithmus (AC⁻¹) auf das Kryptogramm des Stammkontrollworts (CMCR) anwendet, indem man den personalisierten Dienstschlüssel (CSP) als Dechiffrierparameter nimmt (Fig. 11).

5. Verfahren zum Empfangen personalisierter, nach dem Verfahren nach einem der Ansprüche 1 bis 4 gesendeter Programme, wobei diese personalisierten Programme verschlüsselt sind und mit Empfänger-Identifizierern (ID1, ID2, ..., IDn) sowie einer für alle diese Empfänger gültigen Zugangsberechtigungs-Kontrollnachricht (MCTA) empfangen werden und diese Zugangsberechtigungs-Kontrollnachricht Zugangskriterien und ein Kryptogramm (CMCR) eines einmaligen, Stammkontrollwort (MCR) genannten Kontrollworts umfaßt, wobei man in diesem Verfahren prüft ob die Zugangskriterien erfüllt sind, das Kontrollwort (MC) wiederherstellt, das zum Verschlüsseln gedient hat und die empfangenen Programme entschlüsselt, und dieses Empfangsverfahren dabei dadurch gekennzeichnet ist, daß jeder Empfänger (D1, D2, ..., Dn) mit Hilfe seines Identifizierers (ID1, ID2, ..., IDn) und der wiederhergestellten Zugangskontrollnachricht aufgrund des Stammkontrollworts (MCR) und seinem eigenen personalisierten Kontrollwort (MCP1, MCP2, ..., MCPn) die für ihn bestimmten Programme entschlüsseln kann und daß nur er alleine sie entschlüsseln kann.

6. Empfangsverfahren nach Anspruch 5 für nach Anspruch 2 gesendete Programme, dadurch gekennzeichnet, daß es die folgenden Operationen umfaßt:
1) jeder Empfänger empfängt die Programmelemente (EP1, EP2, ..., EPn) mit ihren Empfänger-Identifizierern (ID1, ID2, ..., IDn) und ihren verschlüsselten personifizierten Programmelementen (EPPE1, EPPE2, ..., EPPEn) und empfängt auch die Zugangsberechtigungs-Kontrollnachrichten (MCTA);
m) ein bestimmter Empfänger (Di) behält von den empfangenen Programmelementen diejenigen, die den ihm entsprechenden Identifizierer (IDi) enthalten, wodurch er die verschlüsselten personalisierten Programmelemente (EPPEi) erhält, die für ihn bestimmt sind;
n) der Empfänger (Di) prüft aufgrund der Zugangsberechtigungs-Kontrollnachrichten (MCTA), ob die Zugangskriterien (CA) durch die Zugangsberechtigungen, die er besitzt, erfüllt sind; gegebenenfalls überprüft er die Integrität der Nachricht durch Analyse der Signatur, wenn diese beim Senden ausgeführt worden ist;
o) ausgehend vom Kryptogramm des Stammkontrollworts (CMCR), dem Dienstschlüssel (CS) und seinem Identifizierer (IDi) wendet der Empfänger (Di) den zu dem beim Senden in Operation e) angewandten Chiffrieralgorithmus (AC) inversen Dechiffrieralgorithmus (AC⁻¹) an und den Diversifikationsalgorithmus (AD), angewandt beim Senden in Operation f), um sein eigenes personalisiertes Kontrollwort (MCPi) zu finden;
p) der Empfänger (Di) entschlüsselt dann die für ihn bestimmten verschlüsselten personalisierten Programmelemente (EPPEi), erhalten nach der Operation m) aufgrund des nach der Operation o) erhaltenen Kontrollworts (MCPi), und empfängt die für ihn bestimmten personalisierten Programmelemente (EPPi) unverschlüsselt.

7. Empfangsverfahren nach Anspruch 6 für nach Anspruch 3 gesendete Programme, dadurch gekennzeichnet, daß der Empfänger (Di), um in Operation o) aufgrund des Kryptogramms des Stammkontrollworts (CMCR), des Dienstschlüssels (CS) und des Identifizierers (IDi) sein eigenes personalisiertes Kontrollwort (MCPi) zu erhalten, damit beginnt, auf das Kryptogramm des Stammkontrollworts (CMCR) den zum Chiffrieralgorithmus (AC) inversen Dechiffrieralgorithmus (AC⁻¹) anzuwenden, indem er den Dienstschlüssel (CS) als Parameter nimmt, was ihm das Stammkontrollwort (MCR) liefert, und dann auf dieses Stammkontrollwort (MCR) den Diversifikationsalgorithmus (AD) anwendet, indem er die Eigenadresse (UA) als Diversifikationsparameter nimmt, was ihm schließlich sein eigenes personalisiertes Kontrollwort liefert (Fig. 12).

8. Empfangsverfahren nach Anspruch 7 für nach Anspruch 4 gesendete Programme, dadurch gekennzeichnet, daß der Empfänger (Di), um in Operation o) aufgrund des Kryptogramms des Stammkontrollworts (CMCR) , des Dienstschlüssels (CS) und des Identifizierers (IDi) sein eigenes personalisiertes Kontrollwort (MCPi) zu erhalten, damit beginnt, den Diversifikationsalgorithmus (AD) auf den Dienstschlüssel (CS) anzuwenden, mit der Adresse (UA) als Diversifikationsparameter, was ihm den personalisierten Dienstschlüssel (CSP) liefert, und dann den Dechiffrieralgorithmus (AC⁻¹) auf das Kryptogramm des Stammkontrollworts (CMCR) anwendet, indem er den personalisierten Dienstschlüssel (CSP) als Dechiffrierparameter nimmt, was ihm schließlich sein eigenes personalisiertes Kontrollwort (MCPi) liefert (Fig. 13).

## Claims

1. Process for the transmission of personalized programs, in which the programs are scrambled by a check word and access check messages are formed, which more particularly contain access criteria and a cryptogram of the check word, said process being characterized in that, for sending personalized programs to various recipients (D1, D2, ... Dn) identified by identifiers (ID1, ID2, ... IDn), the check word used for scrambling the program intended for a particular recipient is obtained by a diversification algorithm (AD) from the identifier of the recipient and a single check word known as the "root" check word (MCR), valid for all the recipients and only one access check message is transmitted for all the recipients, said message in particular containing a cryptogram of the root check word and the identifiers (ID1, ID2, ... IDn) of the recipients.

2. Process according to claim 1, characterized in that it comprises the following operations:
a) the program to be transmitted is subdivided into several n) program elements called personalized program elements (EPP1, EPP2, ... EPPn) intended for the same number (n) of different recipients (D1, D2, ... Dn);
b) to each recipient (D1, D2, ... Dn) is allocated an identifier (ID1, ID2, ... IDn);
c) in random manner a control word is produced which applies to all the recipients and called the root control word (MCR);
d) a service key (CS) is defined by a service key identifier (ICS);
e) on the basis of the root control word (MCR) and the service key (CS) an encrypting algorithm (AC) is produced for obtaining a cryptogram of the root control word (CMCR);
f) on the basis of the root control word (MCR) or the root control word cryptogram (CMCR), the identification of the recipients (ID1, ID2, ... IDn) and the service key (CS) production takes place of a diversification algorithm (AD), which supplies individual control words for each recipient (D1, D2, ... Dn), called personalized control words (MCP1, MCP2, ... MCPn);
g) on the basis of personalized program elements (EPP1, EPP2, ... EPPn) and personalized control words (MCP1, MCP2, ... MCPn) corresponding to the different recipients (D1, D2, ... Dn) aimed at, scrambling takes place of said personalized program elements (EPP1, EPP2, ... EPPn) with the aid respectively of said personalized control words (MCP1, MCP2, ... MCPn) to obtain scrambled personalized program elements (EPP1, EPP2, ... EPPn);
h) to these scrambled personalized program elements are added the recipient identifiers (ID1, ID2, ... IDn) in order to form program elements (EP1, EP2, ... EPn) individual to these different recipients;
i) access criteria (CA) are defined and which must be satisfied to have the right of using the service key (CS);
j) on the basis of the root control word cryptogram (CMCR), the service key identifier (ICS), access criteria (CA) and optionally a signature SIGN) of said cryptogram and the access criteria, access title control messages (MCTA) are formed;
k) the program elements (EP1, EP2, ... EPn) and the access title control messages (MCTA) are transmitted.

3. Process according to claim 2, characterized in that:
in order to obtain, in operation f), personalized control words (MCP1, MCP2, ... MCPn) on the basis of the root control words (MCR), the identification of the recipients (ID1, ID2, ... IDn) and the service key (CS), the diversification algorithm (AD) is applied to the root control word with the service key (CS) and the single address (UA) of the recipient as the diversification parameter (fig. 10).

4. Process according to claim 2, characterized in that:
to obtain, in operation f), personalized control words (MCP1, MCP2, ... MCPn) from root control word (MCR), the recipient identifier (ID1, ID2, ... IDn) and the service key (CS), the diversification algorithm (AD) is applied to the service key (CS) taking the single or unique address as the diversification parameter, which gives a personalized service key (CSP) and then the decrypting algorithm (AC⁻¹) is applied to the root control word cryptogram (CMCR) using the personalized service key (CSP) as the decrypting parameter (fig. 11).

5. Process for the reception of personalized programs transmitted by the process according to any one of the claims 1 to 4, said personalized programs being scrambled and received with recipient identifiers (ID1, ID2, ... IDn), as well as with an access title check message (MCTA) applicable to all said recipients, said access check message incorporating access criteria and a cryptogram of a single check word (CMCR), called the root check word (MCR), wherein a verification is made to establish whether the access criteria are fulfilled, the check word (MC) used for scrambling is reconstituted and the programs received are descrambled, said reception process being characterized in that each recipient (D1, D2, ... Dn), with the aid of his identifier (ID1, ID2, ... IDn) and the access check message reconstitutes, from the root check word (MCR), the personalized check word (MCP1, MCP2, ... MCPn) individual to him, which enables him and him alone to descramble the program intended for him.

6. Reception process according to claim 5 for programs transmitted according to claim 2, characterized in that:
1) each recipient receives the program elements (EP1, EP2, ... EPn) with their recipient identifiers (ID1, ID2, ... IDn) and their scrambled personalized program elements (EPPE1, EPPE2, ... EPPEn) and also receives the access title control messages (MCTA);
m) a particular recipient (Di) retains, in the received program elements, those which contain the identifier corresponding to him (IDi), which gives him the scrambled personalized program elements (EPPEi) intended for him;
n) on the basis of access title control messages (MCTA), the recipient (Di) checks whether the access criteria (CA) are fulfilled by his access title and if so he checks the integrity of the message by analyzing the signature if the latter has been made on transmission;
o) on the basis of the cryptogram of the root control word (CMCR), the service key (CS) and his identifier (IDi), the recipient (Di) produces the reverse algorithm (AC⁻¹) of the encrypting algorithm (AC) produced on transmission in operation e) and produces the diversification algorithm (AD) produced on transmission in operation f) for again finding his own personalized control word (MCPi);
p) the recipient (Di) then descrambles the scrambled personalized program elements (EPPEi) intended for him and obtained after operation m) on the basis of the personalized control word (MCPi) obtained after operation o) and obtains in uncoded form the personalized.

7. Reception process according to claim 6, for programs according to claim 3, characterized in that to obtain, in operation o), from the cryptogram of the root control word (CMCR), the service key (CS) and the identifier (IDi), the personalized control word individual to him (MCPi), the recipient (Di) starts by applying to the cryptogram the root control word (CMCR), the decrypting algorithm (AC⁻¹) which is the reverse of the encrypting algorithm (AC) using the service key (CS) as the parameter, which gives him the root control word (MCR) and he then applies to the latter the diversification algorithm (AD) using the single address (UA) as the diversification parameter, which finally gives him his individual personalized control word (MCPi) (fig. 12).

8. Reception process according to claim 7 for programs transmitted according to claim 4, characterized in that to obtain, in operation o), from the root control word cryptogram (CMCR), the service key (CS) and the identifier (IDi), the personalized control word individual to him (MCPi), the recipient (Di) starts by applying the diversification algorithm (AD) to the service key (CS) with the address (UA) as the diversification parameter, which gives him the personalized service key (CSP) and he then applies the decrypting algorithm (AC⁻¹) to the root control word cryptogram (CMCR) taking the personalized service key (CSP) as the decrypting parameter, which finally gives him the personalized control word (MCPi) individual to him (fig. 13).
